# EUROPÄISCHE PATENTSCHRIFT

(11) **EP 3 137 237 B1**
(45) Veröffentlichungstag und Bekanntmachung des Hinweises auf die Patenterteilung: **07.02.2018**
(21) Anmeldenummer: 15718178.5
(22) Anmeldetag: 13.04.2015
(51) Int. Cl.: B21C 37/08, B21C 51/00, G01N 1/00

(54) **VERFAHREN ZUR DURCHFÜHRUNG VON WERKSTOFFPRÜFUNGEN FÜR MIT DIE MECHANISCHEN EIGENSCHAFTEN BEEINFLUSSENDER WÄRME ZU BEHANDELNDE ROHRE AUS STAHL**
METHOD FOR PERFORMING MATERIAL TESTS FOR PIPES MADE OF STEEL, WHICH PIPES ARE TO BE TREATED WITH HEAT THAT INFLUENCES THE MECHANICAL PROPERTIES
PROCÉDÉ PERMETTANT DE METTRE EN OEUVRE DES CONTRÔLES DE MATÉRIAU POUR DES TUBES EN ACIER DEVANT ÊTRE TRAITÉS AVEC UNE CHALEUR AGISSANT SUR LES PROPRIÉTÉS MÉCANIQUES

(30) Priorität: 29.04.2014 DE 102014006475
(43) Veröffentlichungstag der Anmeldung: 08.03.2017
(73) Patentinhaber: Europipe GmbH, 45473 Mülheim (DE)
(72) Erfinder: GRABOWSKI, Rainer, 40885 Ratingen (DE); BALKENOHL, Christian, 45359 Essen (DE); LIESSEM, Andreas, 45470 Mülheim (DE)
(74) Vertreter: Meissner, Peter E.
(86) Internationale Anmeldenummer: PCT/EP2015/057944
(87) Internationale Veröffentlichungsnummer: WO 2015/165723

(56) Entgegenhaltungen:
- WO-A1-2013/190750
- DE-A1-102012 006 472

## Beschreibung

Die Erfindung betrifft ein Verfahren zur Durchführung von Werkstoffprüfungen für mit die mechanischen Eigenschaften beeinflussender Wärme zu behandelnde Rohre aus Stahl zum Transport von flüssigen oder gasförmigen Medien, gemäß dem Oberbegriff des Patentanspruches 1.

Zu transportierende Medien können beispielsweise Wasser, Öl, Erdgas oder auch andere Medien sein. Die aus einzelnen zusammengesetzten Rohren bestehende Rohrleitung kann sowohl unterirdisch als auch oberirdisch oder in Wasser verlegt sein.

Die Rohre selbst werden in einem ersten Prozessschritt geschweißt oder nahtlos hergestellt, beispielsweise mit einem Durchmesser von 504 mm bis 1220 mm und Wanddicken von 17 mm bis 50 mm.

Üblicherweise werden aber für derartige Rohrleitungen längsnahtgeschweißte nach dem UOE-Verfahren hergestellte Rohre eingesetzt. Ein solches Herstellungsverfahren ist zum Beispiel aus der DE 196 02 920 A1 bekannt.

Nach der Herstellung des Rohres wird das so produzierte Rohr zur Verbindung der Rohre untereinander an den Enden mittels mechanischer Bearbeitung mit einer Schweißfase versehen und die Enden mittels zerstörungsfreier Prüfung auf Fehlerfreiheit untersucht. Desweiteren wird bei einem längsnahtgeschweißten Rohr die Schweißnaht ausgehend vom Rohrende auf einer Länge von etwa 100 bis 200 mm blecheben abgeschliffen, um später eine einwandfreie Verbindungsschweißung an den Rohren herstellen zu können.

Um die mechanischen Eigenschaften wie zum Beispiel die Streckgrenze und Festigkeit der Rohre nach der Rohrherstellung zu erhöhen, ist es bekannt, diese unter Ausnutzung des sogenannten Bake-hardening-Effektes in einem zweiten Prozessschritt einer nachträglichen Wärmebehandlung in einem Temperaturbereich von ca. 200°C bis 300°C zu unterziehen.

Diese Wärmebehandlung kann entweder allein oder im Zuge des Aufbringens einer Kunststoffbeschichtung als Korrosionsschutz durchgeführt werden.

Beim Aufbringen der Kunststoffbeschichtung wird zunächst auf das auf Beschichtungstemperatur erwärmte Rohr ein Haftvermittler, anschließend ein Kleber und danach die Deckbeschichtung aufgebracht, die aus einem thermoplastischen Kunststoff, zum Beispiel Polyethylen oder Polypropylen bestehen kann. Der Haftvermittler dient dabei dem eigentlichen Korrosionsschutz und die Deckbeschichtung erhöht den Schutz vor mechanischen Beschädigungen, die z.B. beim Handling oder bei der Verlegung der Rohre auftreten können. Eine solche Beschichtung ist zum Beispiel aus der DE 3047429 A1 bekannt.

Da sich die mechanischen Eigenschaften des Stahls nach einer solchen (bake-hardening) Wärmebehandlung in gewünschter Weise verändern sollen, ist es zwingend erforderlich, die mechanischen Kennwerte im Rahmen einer produktionsbegleitenden zerstörenden Werkstoffprüfung zu ermitteln und mit den geforderten Werten zu vergleichen.

Im Rahmen der bekannten Prozesskette für die Rohrherstellung wird dazu zunächst das Rohr, welches wärmebehandelt werden soll, von der Rohrfertigung zur Wärmebehandlungsanlage transportiert, anschließend wärmebehandelt und falls gefordert, in einer nachgeschalteten Beschichtungsanlage mit einer Kunststoffbeschichtung versehen.

Abhängig von der geforderten Prüfdichte werden dann von dem so fertiggestellten Rohr Proben im Regelfall als Ringabschnitt von einzelnen oder allen Rohren eines Walzloses bzw. einer Stahlcharge abgetrennt und daran die erzielten mechanischen Eigenschaften des Stahls ermittelt. Die im Rohrwerk gefertigte Rohrlänge wird gegebenenfalls um die abzuscheidende Ringbreite entsprechend vergrößert, so dass die vom Kunden geforderte Rohrlänge eingehalten wird.

Für die mechanische Werkstoffprüfung wird bei beschichteten Rohren vor dem Abtrennen des Ringabschnittes die Beschichtung zunächst von der Außenoberfläche entfernt.

Die abzutrennende Ringbreite ergibt sich dabei aus den davon zu entnehmenden Proben für die mechanische Werkstoffprüfung und beträgt beispielsweise 100 bis 300mm.

Dieses Vorgehen weist allerdings enorme Nachteile auf. Zum Einen kann erst mit erheblichem zeitlichen Versatz an dem bereits komplett fertiggestellten Rohr, welches fallweise auch noch mit einer teuren Beschichtung versehen ist, festgestellt werden, ob die Kundenanforderungen an die mechanischen Eigenschaften auch tatsächlich erreicht wurden.

Falls dies nicht der Fall ist, muss das komplett fertiggestellte Rohr und fallweise weitere bereits entsprechend produzierte Rohre entweder aufwändig nachgearbeitet oder aber, wenn dies nicht möglich ist, sogar verschrottet werden.

Zudem wird beim thermischen Abtrennen eines Ringabschnittes von einem beschichteten Rohr die Beschichtung am verbleibenden Rohrende beschädigt, so dass eine Nacharbeitung oder Erneuerung erforderlich wird. Auch wird das neuerliche Anbringen einer Schweißfase an dem Ende des verbliebenen Rohres notwendig, sowie die aufwändige Beseitigung der Beschichtung aus diesem Bereich.

Desweiteren müssen nach dem Abtrennen des Ringabschnittes die Schweißnähte erneut auf einer Länge von 100 bis 200mm blecheben geschliffen und die Rohrenden erneut zerstörungsfrei geprüft werden, was zusätzlichen Arbeitsaufwand bedeutet und fallweise eine Neubeschichtung erforderlich macht.

Aufgabe der Erfindung ist es daher, ein kostengünstiges Verfahren zur Durchführung von Werkstoffprüfungen von mit Wärme zu behandelnden und fallweise mit einer Beschichtung zu versehenden Rohren anzugeben, mit dem zeitnah eine Aussage über die erreichten mechanischen Eigenschaften des Rohres ermöglicht und ein fallweise notwendiger Nacharbeitsaufwand sowie der Logistikaufwand für den innerbetrieblichen Rohrtransport erheblich reduziert wird.

Diese Aufgabe wird ausgehend vom Oberbegriff in Verbindung mit dem kennzeichnenden Teil des Patentanspruches 1 gelöst. Vorteilhafte Weiterbildungen sind Bestandteil von Unteransprüchen.

Die Lehre der Erfindung umfasst ein Verfahren zur Durchführung von Werkstoffprüfungen für mit die mechanischen Eigenschaften beeinflussender Wärme zu behandelnde Rohre und fallweise zu beschichtende Rohre aus Stahl zum Transport von flüssigen oder gasförmigen Medien, wobei in einem ersten Prozessschritt ein nahtloses oder geschweißtes Rohr erzeugt wird, welches nach der Herstellung in einem zweiten Prozessschritt einer Wärmebehandlungsanlage zur Beeinflussung der mechanischen Eigenschaften zugeführt und dem in einem anschließenden dritten Prozessschritt eine Probe zur Ermittlung der mechanischen Eigenschaften entnommen wird, welches dadurch gekennzeichnet ist, dass unter Entfall des dritten Prozessschrittes, bereits nach dem ersten Prozessschritt der Herstellung des Rohres, dem noch unbehandelten Rohr eine Probe entnommen und zunächst nur diese Probe einer dem verbliebenen Rohr entsprechenden Wärmebehandlung zugeführt wird und anschließend hieran die mechanischen Eigenschaften ermittelt und mit den geforderten Eigenschaften verglichen werden und anschließend das Rohr, dem die Probe entnommen wurde, für eine mechanische Bearbeitung der Rohrenden und den nachfolgenden zweiten Prozessschritt der Wärmebehandlung freigegeben oder gesperrt wird.

Der große Vorteil der Erfindung besteht in einer drastischen Minimierung des Zeit- und Kostenaufwandes für die Durchführung der produktionsbegleitenden zerstörenden und zerstörungsfreien Werkstoffprüfung an Rohren, die nach der Herstellung einer festigkeitssteigernden Wärmebehandlung unterzogen werden. Erfindungsgemäß wird dies durch eine Entkopplung der zerstörenden mechanischen Prüfung an den Proben von der Rohrendenbearbeitung erreicht. Als Probe wird dazu vorteilhaft ein Ringabschnitt von einem Rohrende abgetrennt.

Da zunächst nur der Ringabschnitt und nicht das gesamte Rohr einer Wärmebehandlung unterzogen wird, kann bei festgestellten nicht tolerierbaren Abweichungen von den Kundenanforderungen das Rohr sehr zeitnah für die vorgesehene Wärmebehandlung aus der Produktionslinie ausgeschleust, gesperrt und Abhilfemaßnahmen, wie zum Beispiel Änderung der Wärmebehandlungsparameter oder ähnliches, eingeleitet werden.

Zudem entfallen unnötige Rohrtransporte von der Rohrherstellungsanlage zur Wärmebehandlungs- bzw. Beschichtungsanlage und damit teure weitere Bearbeitungen an einem eventuell nicht mehr gebrauchstauglichen Rohr.

Da erfindungsgemäß der Ringabschnitt für die zerstörende Werkstoffprüfung nicht vom fertig wärmebehandelten bzw. beschichteten Rohr abgetrennt sondern schon vom unbehandelten Rohr und anschließend separat wärmebehandelt wird, kann nach Bestätigung der geforderten mechanischen Eigenschaften, am entsprechenden Rohr die Schweißfase mittels mechanischer Bearbeitung der Rohrenden angebracht, die zerstörungsfreie Rohrendenprüfung durchgeführt und das Rohr komplett fertigbearbeitet und anschließend der Wärmebehandlungsanlage bzw. der Beschichtungsanlage zugeführt werden.

Somit entfallen die ansonsten notwendigen Nacharbeiten nach Abtrennen des Ringabschnittes an dem fertigen wärmebehandelten bzw. beschichteten Rohr, wie Ausbessern der Beschichtung, erneutes Anbringen der Schweißfase und zusätzliche zerstörungsfreie Rohrendenprüfung. Auch entfallen entsprechende Rohrtransporte zu den entsprechenden Nachbearbeitungsplätzen.

Vorteilhaft wird die Wärmebehandlung des Rohres im Zuge des Aufbringens einer Ummantelung aus thermoplastischem Kunststoff durchgeführt, wenn eine Beschichtung des Rohres vom Kunden gefordert ist.

In einer weiteren vorteilhaften Ausgestaltung der Erfindung wird der vom Rohrende des noch nicht zur Wärmebehandlung freigegebenen Rohres abgetrennte Ringabschnitt gemeinsam mit einem bereits zur Wärmebehandlung freigegebenen Rohr der Wärmebehandlungsanlage zugeführt. Hierbei ist es für einen kontinuierlichen Durchlauf durch die Wärmebehandlungs- bzw. Beschichtungsanlage von Vorteil, wenn der Ringabschnitt mittels eines Kupplungselementes an das Rohr angekuppelt und zusammen mit diesem durch die Anlage befördert wird.

Wird die Wärmebehandlung im Zuge einer nachfolgenden Beschichtung durchgeführt, wird dazu vorteilhaft die Außenoberfläche des Ringabschnittes und der sich anschließende Endenbereich des angekuppelten Rohres zum Beispiel mit einer die Haftung der Beschichtung verhindernden Abdeckung versehen, so dass sich die aufgebrachte Beschichtung vom Ringabschnitt und dem Endenbereich des Rohres, der ja später verschweißt werden soll, wieder leicht ablösen lässt. Vorteilhaft kann dies zum Beispiel mit einem Antihaftband geschehen, mit dem dieser Bereich umwickelt wird.

Um die spätere Zuordnung des Ringabschnittes zum davon abgetrennten Rohr zu gewährleisten, erhalten Ringabschnitt und Rohr eine zuordenbare Identifizierungsmarkierung, die aus einer auf die Probe zum Beispiel durch einen Aufkleber aufgebrachten Kennnummer, einem Barcode oder Data-Matrix-Code bestehen kann. Somit ist gewährleistet, dass nach erfolgter zerstörender Prüfung des Ringabschnittes die Ergebnisse dem jeweiligen noch nicht wärmebehandelten Rohr zugeordnet werden können.

Wenn die Prüfung der Rohre produktionsbegleitend erfolgt, ist es somit möglich, zeitnah einen Rückschluss auf die zu erwartenden Eigenschaften des später wärmebehandelten bzw. beschichteten Rohres zu erhalten und bei nicht tolerablen Abweichungen frühzeitig im Produktionsprozess Abhilfemaßnahmen einzuleiten.

Durch die erfindungsgemäße Entkopplung von Ringprüfung und Rohrendenbearbeitung werden somit einerseits die Kosten für eventuell notwendige Nacharbeiten an den Rohren, Verschrottungskosten sowie die Kosten für die Transportlogistik der Rohre erheblich reduziert.

## Patentansprüche

1. Verfahren zur Durchführung von Werkstoffprüfungen für mit die mechanischen Eigenschaften beeinflussender Wärme zu behandelnde Rohre aus Stahl zum Transport von flüssigen oder gasförmigen Medien, wobei in einem ersten Prozessschritt ein nahtloses oder geschweißtes Rohr erzeugt, welches nach der Herstellung in einem zweiten Prozessschritt einer Wärmebehandlungsanlage zur Beeinflussung der mechanischen Eigenschaften zugeführt und dem in einem anschließenden dritten Prozessschritt eine Probe zur Ermittlung der mechanischen Eigenschaften entnommen wird,
**dadurch gekennzeichnet,**
**dass** unter Entfall des dritten Prozessschrittes bereits nach dem ersten Prozessschritt der Herstellung des Rohres dem Rohr eine Probe entnommen und zunächst nur diese Probe einer dem zu behandelnden Rohr entsprechenden Wärmebehandlung zugeführt und anschließend hieran die mechanischen Eigenschaften ermittelt und mit den geforderten Eigenschaften verglichen werden und anschließend das Rohr, dem die Probe entnommen wurde, für eine mechanische Bearbeitung der Rohrenden und den nachfolgenden zweiten Prozessschritt der Wärmebehandlung freigegeben oder gesperrt wird.

2. Verfahren nach Anspruch 1
**dadurch gekennzeichnet,**
**dass** die Wärmebehandlung des Rohres im Zuge des Aufbringens einer Ummantelung aus thermoplastischem Kunststoff durchgeführt wird.

3. Verfahren nach Anspruch 1 und 2
**dadurch gekennzeichnet,**
**dass** als Probe vom Rohrende des noch nicht zur Wärmebehandlung freigegebenen Rohres ein Ringabschnitt abgetrennt und dieser gemeinsam mit einem bereits zur Wärmebehandlung freigegebenen Rohr der Wärmebehandlungsanlage zugeführt wird.

4. Verfahren nach Anspruch 3
**dadurch gekennzeichnet,**
**dass** der Ringabschnitt mittels eines Kupplungselementes an das Rohr angekuppelt wird.

5. Verfahren nach einem der Ansprüche 3 bis 4
**dadurch gekennzeichnet,**
**dass** bei einer vorgesehenen Beschichtung im Anschluss an die Wärmebehandlung, der Ringabschnitt mit einer die Haftung der Beschichtung auf dem Ringabschnitt verhindernden Abdeckung versehen wird.

6. Verfahren nach einem der Ansprüche 3 bis 5
**dadurch gekennzeichnet,**
**dass** der dem Rohr entnommene Ringabschnitt eine dem Rohr zuordenbare Identifizierungsmarkierung erhält.

7. Verfahren nach Anspruch 6
**dadurch gekennzeichnet,**
**dass** die Identifizierungsmarkierung aus einer auf den Ringabschnitt und das zugehörige Rohr aufgebrachten Kennnummer, einem Barcode oder Data-Matrix-Code besteht.

8. Verfahren nach einem der Ansprüche 3 bis 7
**dadurch gekennzeichnet,**
**dass** nach dem Abtrennen des Ringabschnittes vom nicht wärmebehandelten Rohr die Rohrenden mechanisch endbearbeitet und einer zerstörungsfreien Prüfung auf Fehler unterzogen werden.

## Claims

1. Method for performing material tests for pipes made of steel for transporting liquid or gaseous media, which pipes are to be treated with heat that influences the mechanical properties, wherein in a first process step a seamless or welded pipe is produced, which, after the production, is fed to a heat treatment installation for influencing the mechanical properties in a second process step and from which a specimen for determining the mechanical properties is taken in a subsequent third process step,
**characterised**
**in that** the third process step being omitted, a specimen is taken from the pipe already after the first process step of the production of the pipe and initially only said specimen is fed to a heat treatment corresponding to the pipe to be treated, and subsequently to this the mechanical properties are determined and compared with the required properties and subsequently the pipe from which the specimen was taken is released or blocked for a machining of the pipe ends and for the following second process step of the heat treatment.

2. Method according to claim 1
**characterised**
**in that** the heat treatment of the pipe is performed in the course of applying a casing made of thermoplastic.

3. Method according to claim 1 and 2
**characterised**
**in that** as specimen a ring section is separated from the pipe end of the pipe not yet released for the heat treatment, and said ring section is fed, together with a pipe already released for the heat treatment, to the heat treatment installation.

4. Method according to claim 3
**characterised**
**in that** the ring section is coupled to the pipe by means of a coupling element.

5. Method according to one of claims 3 to 4
**characterised**
**in that**, in the case of a coating provided subsequent to the heat treatment, the ring section is provided with a cover preventing the adhesion of the coating on the ring section.

6. Method according to one of claims 3 to 5
**characterised**
**in that** the ring section taken from the pipe is given an identification mark assignable to the pipe.

7. Method according to claim 6
**characterised**
**in that** the identification mark consists of an identification number applied to the ring section and the associated pipe, a bar code or data matrix code.

8. Method according to one of claims 3 to 7
**characterised**
**in that** after the separating of the ring section from the pipe not heat-treated, the pipe ends are finish-machined and undergo a non-destructive testing for faults.

## Revendications

1. Procédé de mise en oeuvre de contrôles de matériau pour des tubes en acier à traiter avec de la chaleur qui influence les propriétés mécaniques, lesdits tubes étant destinés à transporter des fluides liquides ou gazeux, dans lequel, dans une première étape du procédé, on produit un tube dépourvu de soudure ou soudé qui, une fois fabriqué, dans une seconde étape du procédé, est amené à une installation de traitement thermique pour influencer les propriétés mécaniques, et duquel, dans une troisième étape successive du procédé, on prélève un échantillon pour déterminer les propriétés mécaniques,
**caractérisé en ce que**
en omettant la troisième étape du procédé, déjà après la première étape du procédé de fabrication du tube, on prélève un échantillon du tube et tout d'abord on n'amène que cet échantillon au traitement thermique correspondant au tube à traiter, et ensuite on détermine les propriétés mécaniques et on les compare aux propriétés requises, et ensuite on libère ou on interdit le tube duquel on a prélevé l'échantillon pour un traitement mécanique des extrémités du tube et pour la seconde étape suivante du traitement thermique.

2. Procédé selon la revendication 1,
**caractérisé en ce que**
on met en oeuvre le traitement thermique du tube au cours de l'application d'une enveloppe en matière synthétique thermoplastique.

3. Procédé selon la revendication 1 et 2,
**caractérisé en ce que**
à titre d'échantillon, on coupe une portion annulaire depuis l'extrémité du tube qui n'est pas encore libéré pour le traitement thermique, et on amène ladite portion à l'installation de traitement thermique, conjointement avec un tube déjà libéré pour le traitement thermique.

4. Procédé selon la revendication 3,
**caractérisé en ce que**
on couple la portion annulaire au tube à l'aide d'un élément de couplage.

5. Procédé selon l'une des revendications 3 à 4,
**caractérisé en ce que**
lors d'un revêtement prévu à la suite du traitement thermique, on munit la portion annulaire d'un recouvrement qui empêche l'adhésion du revêtement sur la portion annulaire.

6. Procédé selon l'une des revendications 3 à 5,
**caractérisé en ce que**
la portion annulaire prélevée du tube comprend un marquage d'identification associable au tube.

7. Procédé selon la revendication 6,
**caractérisé en ce que**
le marquage d'identification est constitué par un numéro d'identification, un code à barres ou un code à matrice de données appliqué sur la portion annulaire et sur le tube associé.

8. Procédé selon l'une des revendications 3 à 7,
**caractérisé en ce que**
après avoir coupé la portion annulaire depuis le tube non traité thermiquement, on finit mécaniquement les extrémités du tube et on les soumet à un contrôle non destructif relatif à des défauts.
